# EUROPÄISCHE PATENTSCHRIFT

(11) **EP 1 169 560 B1**
(45) Veröffentlichungstag und Bekanntmachung des Hinweises auf die Patenterteilung: **01.09.2004**
(21) Anmeldenummer: 01913530.0
(22) Anmeldetag: 24.01.2001
(51) Int. Cl.: F02D 41/14, F02D 33/02

(54) **VERFAHREN UND EINRICHTUNG ZUR BESTIMMUNG ZYLINDERINDIVIDUELLER UNTERSCHIEDE EINER STEUERGRÖSSE BEI EINER MEHRZYLINDRIGEN BRENNKRAFTMASCHINE**
METHOD AND DEVICE FOR DETERMINING CYLINDER-INDIVIDUAL DIFFERENCES OF A CONTROLLED VARIABLE IN A MULTICYLINDER INTERNAL COMBUSTION ENGINE
PROCEDE ET DISPOSITIF POUR DETERMINER DES DIFFERENCES DE VARIABLE DE REFERENCE, PROPRES AUX CYLINDRES, DANS UN MOTEUR A COMBUSTION INTERNE A PLUSIEURS CYLINDRES

(30) Priorität: 11.02.2000 DE 10006161
(43) Veröffentlichungstag der Anmeldung: 09.01.2002
(73) Patentinhaber: ROBERT BOSCH GMBH, 70442 Stuttgart (DE)
(72) Erfinder: HESS, Werner, 70499 Stuttgart (DE); RIES-MUELLER, Klaus, 74906 Bad Rappenau (DE)
(86) Internationale Anmeldenummer: PCT/DE2001/000272
(87) Internationale Veröffentlichungsnummer: WO 2001/059282

(56) Entgegenhaltungen:
- EP-A- 0 140 065
- EP-A- 0 833 043
- WO-A-01/04465
- DE-A- 19 828 279
- DE-A- 19 859 018
- US-A- 5 515 828
- PATENT ABSTRACTS OF JAPAN vol. 012, no. 227 (M-713), 28. Juni 1988 (1988-06-28) & JP 63 021338 A (NISSAN MOTOR CO LTD), 28. Januar 1988 (1988-01-28)
- PATENT ABSTRACTS OF JAPAN vol. 1998, no. 06, 30. April 1998 (1998-04-30) & JP 10 037727 A (FUJI HEAVY IND LTD), 10. Februar 1998 (1998-02-10)

## Beschreibung

Die Erfindung betrifft ein Verfahren sowie eine Einrichtung zur Bestimmung zylinderindividueller Unterschiede einer Steuergröße bei einer mehrzylindrigen Brennkraftmaschine.

### Stand der Technik

An moderne Brennkraftmaschinen werden beispielsweise im Hinblick auf Laufruhe und Reduktion des Schadstoffausstoßes immer höhere Anforderungen gestellt. Diese sollen bei allen Belastungszuständen der Brennkraftmaschine erfüllt sein, wobei sich die verschiedenen Belastungszustände im wesentlichen aus der aktuellen Betriebssituation unter Berücksichtigung eines Bedarfs nach Reduktion oder Steigerung des von der Brennkraftmaschine zur Verfügung gestellten Drehmomentes ergeben. Eine Hauptaufgabe der Steuerung für die Brennkraftmaschine ist es, das von dieser erzeugte Drehmoment einzustellen, wozu in verschiedenen Teilsystemen der Steuerung drehmomentbeeinflussende Größen gesteuert werden.

Eine zentrale Steuergröße moderner Motorsteuerungen ist die sogenannte Füllung, die im Teilsystem Füllungssteuerung beeinflußt wird. Im Sinne dieser Anmeldung bezeichnet der Begriff "Füllung" im wesentlichen die Masse an unverbrauchtem Sauerstoff, der für die Verbrennung zur Verfügung steht. Die Füllung wird auch als Luftfüllung bezeichnet. Neben der Füllungssteuerung ist eine genaue Steuerung der Gemischzusammensetzung erforderlich, also der Kraftstoffanreicherung im Kraftstoff-Luftgemisch. Das Kraftstoff-Luft-Mischungsverhältnis wird bekanntlich durch das Luftverhältnis λ charakterisiert, das das Verhältnis zwischen der die Füllung bestimmenden, zugeführten Luftmenge und dem theoretischen Luftbedarf für vollkommene Verbrennung angibt. Dabei entspricht λ = 1 im Hinblick auf optimale, rückstandsfreie Verbrennung einem Idealwert, während Werte λ < 1 einem Luftmangel bzw. einem fetten Gemisch und Werte λ > 1 einem Luftüberschuß bzw. einem mageren Gemisch entsprechen. Im Teilsystem Gemischbildung der Steuerung wird die einer Füllung zugehörende Kraftstoffmasse berechnet und daraus die erforderliche Einspritzzeit und der optimale Einspritzzeitpunkt bestimmt. Schließlich wirkt sich auch eine zeitgerechte Entflammung des Gemisches auf den Verbrennungsverlauf aus.

Es sind schon verschiedene Vorschläge gemacht worden, bei Verbrennungsmotoren mit zylinderindividueller Kraftstoffzumessung, insbesondere bei Verbrennungsmotoren mit Direkteinspritzung von Kraftstoff in die Brennkammern der einzelnen Zylinder, eine optimierte Motorsteuerung durchzuführen. So ist es beispielsweise bekannt, daß insbesondere bei Otto-Motoren mit Kraftstoff-Direkteinspritzung Fertigungstoleranzen bei der Herstellung von Einspritzventilen im Betrieb zu zylinderindividuellen Gemischunterschieden führen, die sich in unterschiedlichen Drehmomentbeiträgen der einzelnen Zylinder zum Gesamtdrehmoment des Motors bemerkbar machen. Dies kann zu unruhigem Motorlauf führen. Dieses Problem kann durch Angleichung bzw. Gleichstellung der zylinderindividuellen Drehmomentbeiträge gelöst werden. Dabei werden durch geeignete Maßnahmen individuelle Beiträge der einzelnen Zylinder zur Laufunruhe bestimmt und die zylinderspezifischen Einspritzzeiten und damit die zylinderindivuellen Drehmomentbeiträge werden so geregelt, daß sich die zylinderindividuellen Laufunruhewerte einem gemeinsamen Sollwert annähern. Ein Beispiel einer derartigen Motorsteuerung ist in der EP 0 140 065 B1 beschrieben. Ein anderes Beispiel ist in der DE 198 28 279 offenbart.

Es ist auch schon vorgeschlagen worden, die Motorsteuerung im Hinblick auf Optimierung des Schadstoffausstoßes zu verbessern. Hierzu wird beispielsweise in der Veröffentlichung "Development of the High Performance L4 Engine ULEV System" von N. Kishi et al. in: SAE 980415, Seiten 27 ff eine zylinderindividuelle Lamdaregelung angesprochen, die dazu dienen soll, den Luftverhältniswert λ der einzelnen Zylinder jeweils auf den gleichen, optimalen Wert zu regeln, um individuell für jeden Zylinder eine schadstoffoptimierte Verbrennung zu ermöglichen.

Weiterhin ist in der JP 630 21 338 die Bestimmung des Füllungsgrades für jeden Zylinder einer Brennkraftmaschine beschrieben. Aus den individuell gemessenen Werten für die Luft-Kraftstoff-Verhältnisse wird die individuelle den Zylindern zugeführte Luftmenge berechnet.

### Vorteile der Erfindung

Ein erfindungsgemäßes Verfahren sowie eine erfindungsgemäße Einrichtung, mit den Mekmalen gemäß Anspruch 1, bzw, 8, zur Bestimmung zylinderindividueller Unterschiede einer Steuergröße bei einer mehrzylindrischen Brennkraftmaschine zeichnet sich dadurch aus, daß zylinderindividuelle Füllungsunterschiede bestimmt werden. Die Erfindung erlaubt somit einen Zugriff auf eine die Verbrennung und den Betrieb der Brennkraftmaschine wesentlich mitbestimmende Leitgröße, nämlich die Füllung der einzelnen Zylinder im Verhältnis zur Füllung der anderen Zylinder. Die durch die Erfindung gegebene Möglichkeit, zylinderindividuelle Füllungsunterschiede zu erkennen bzw. zu bestimmen, erlaubt eine Berücksichtigung der Füllungsunterschiede bei der Berechnung anderer zylinderindividueller, von der Füllung wesentlich beeinflusster Motorgrößen sowie ggf. eine Korrektur zylinderindividueller Füllungsunterschiede zu deren Gleichstellung. Herkömmlich wurden lediglich Kraftstoffzumessungsunterschiede korrigiert.

Die Erfindung erlaubt auch eine sichere Unterscheidung dahingehend, ob auftretende Drehmomentunterschiede zwischen einzelnen Zylindern im wesentlichen auf zylinderindividuelle Unterschiede bei der Füllung oder zylinderindividuelle Unterschiede beim Luftverhältnis λ zurückzuführen sind, das bekanntlich außer von der Füllung auch von der entsprechenden Kraftstoffzumessung abhängig ist.

Das Ergebnis einer Bestimmung zylinderindividueller Füllungsunterschiede kann z.B. dazu genutzt werden, den Zündwinkel zu optimieren, wobei der Begriff Zündwinkel sich auf die winkelmäßige Lage des Zündzeitpunktes zu einem Bezugspunkt, beispielsweise dem oberen Totpunkt des Kolbens eines Zylinders in seinem Verbrennungstakt bezieht. Hierdurch können im Vergleich zu herkömmlichen Klopfregelungen Verbesserungen erreicht werden. Sofern eine Brennkraftmaschine die Möglichkeit einer zylinderindividuellen Steuerung der Luftzumessung besitzt, beispielsweise zylinderindividuelle Drosselklappen, so können erfindungsgemäß ermittelte zylinderindividuelle Füllungsunterschiede direkt zur Ansteuerung dieser Drosselklappe und damit zur Gleichstellung der Zylinderfüllungen genutzt werden. Dies ist insbesondere bei unsymmetrischen Motorgeometrien vorteilhaft, bei denen konstruktionsbedingt, beispielsweise durch unterschiedliche Dimensionierung von Ansaugleitungen für die einzelnen Zylinder, hohe zylinderindividuelle Füllungsunterschiede auftreten können. Die zylinderindividuellen Füllungsunterschiede können aber auch dazu genutzt werden, die Einspritzzeitpunkte zu optimieren.

Bei einer bevorzugten Weiterbildung ist vorgesehen, daß die Bestimmung von zylinderindividuellen Füllungsunterschieden anhand einer Gleichung durchgeführt wird, die als Variable zylinderindividuelle Luftverhältnisse λ und zylinderindividuellen Drehmomentbeiträge enthält. Dadurch ist es möglich, bei der Bestimmung zylinderindividueller Füllungsunterschiede auf eine Messung der einzelnen Zylinderfüllungen zu verzichten, so daß ein Einbau entsprechender Sensoren nicht erforderlich ist. Vielmehr reicht es aus, wenn geeignete Einrichtungen zur zylinderindividuellen Drehmomenterfassung oder - bestimmung und zur zylinderindividuellen Erfassung oder Bestimmung des Luftverhältnisses vorgesehen sind und wenn entsprechende Signale dieser Einrichtungen geeignet kombiniert werden. Dieser einfachen Berechnung von zylinderindividuellen Füllungsunterschieden liegt u.a. die Erkenntnis zugrunde, daß für das von einem Zylinder abgegebene Drehmoment im wesentlichen zwei Einflußgrößen maßgeblich sind, nämlich einerseits die erwähnte Füllung, d.h. die zur Verbrennung zur Verfügung stehende Sauerstoffmasse, und andererseits die durch den λ-Wert angezeigte Gemischzusammensetzung, in die neben der Masse an Verbrennungssauerstoff auch die zugeführte Kraftstoffmasse eingeht. Eine möglicherweise gegebene, vergleichsweise geringfügige Abhängigkeit des Drehmomentes vom Zündwinkel bleibt bei dieser ersten Näherung außer Betracht. Deren Beiträge sind insbesondere im Schichtbetrieb der Brennkraftmaschine vernachlässigbar.

Eine bevorzugte Weiterbildung zeichnet sich dadurch aus, daß durch eine geeignete Gleichstellungsregelung eine Gleichstellung der zylinderindividuellen Luftverhältnisse durchgeführt wird, daß daraufhin zylinderindividuelle Drehmomentunterschiede durch direkte Messung oder indirekte Ableitung bestimmt werden und daß aus den zylinderindividuellen Drehmomentunterschieden die zylinderindividuellen Füllungsunterschiede abgeleitet werden. Dabei wird davon ausgegangen, daß bei gleichen λ-Werten in allen Zylindern ggf. vorhandene Unterschiede bei der Drehmomentabgabe der einzelnen Zylinder ihre Ursachen in unterschiedlichen Füllungen der entsprechenden Zylinder haben. Insbesondere wird von einer direkten Proportionalität zwischen zylinderindividuellem Drehmoment und zylinderindividueller Füllung ausgegangen. Im Hinblick auf einen minimalen Schadstoffausstoß erfolgt die zylinderindividuelle λ-Regelung zweckmäßig auf einen Wert λ = 1.

Die für diese Variante erforderliche Bestimmung zylinderindividueller Drehmomentunterschiede kann auf jede geeignete Weise durchgeführt werden, beispielsweise dadurch, daß die Drehmomentbeiträge einzelner Zylinder zum Gesamtdrehmoment oder in direktem Zusammenhang mit diesen Beiträgen stehende Größen mit geeigneten Sensoren gemessen werden. Es können z.B. geeignete Brennraumdrucksensoren oder Drehmomentsensoren vorgesehn sein. Auf derartige, ggf. kostspielige Messungen kann verzichtet werden, wenn die Bestimmung zylinderindividueller Drehmomentunterschiede anhand einer Auswertung der Laufunruhe der Brennkraftmaschine durchgeführt wird. Hierzu können alle für diesen Zweck geeigneten Verfahren bzw. Einrichtungen genutzt werden, beispielsweise das in der EP 140 065 beschriebene Verfahren zur Zylindergleichstellung, bei dem zur Auswertung des zeitlichen Verlaufs der Drehbewegung der Kurbel- oder Nockenwelle Segmentzeiten erfaßt werden und daraus ein Maß für die Laufunruhe des Motors gebildet wird. Eine Weiterbildung dieses Verfahrens ist in der DE 198 28 279 offenbart. Es ist auch möglich, Laufunruhewerte zu verwenden, die für eine ggf. vorhandene Verbrennungsaussetzerkennung ohnehin für die Steuerung bereitgestellt werden. Die Bildung von Laufunruhewerten zur Verbrennungsaussetzeerkennung ist beispielsweise aus der DE 196 10 215 bekannt. Die die Bildung von Laufunruhewerten und die Ableitung zylinderindividueller Drehmomentbeiträge betreffenden Merkmale dieser Veröffentlichungen werden ausdrücklich in diese Anmeldung einbezogen.

Es kann auch so sein, daß durch entsprechende Regelung beispielsweise von zylinderspezifischen Einspritzzeiten die zylinderindividuellen Drehmomentbeiträge gleichgestellt werden und daß daraufhin zylinderindividuelle Unterschiede des λ-Wertes bestimmt werden. Bei Steuerungen mit der Möglichkeit der erwähnten Gleichstellung der λ-Werte liegen entsprechende zylinderindividuelle λ-Werte ohnehin als Eingangswerte einer Regelung vor. Alternativ oder zusätzlich können auch gesonderte Meßeinrichtungen, beispielsweise individuelle Lamdasonden, zur Messung der individuellen λ-Werte vorgesehen sein. Aus den zylinderindividuellen Unterschieden des Luftverhältnisses (bei im wesentlichen gleichen Drehmomentbeiträgen der einzelnen Zylinder) können dann die zylinderindividuellen Füllungsunterschiede abgeleitet werden. Diese Ableitung beruht auf der Annahme, daß zumindest in erster Näherung die (im Luftverhältnis λ enthaltene) zugeführte Kraftstoffmasse direkt proportional zum abgegeben Drehmoment des Zylinders ist.

### Zeichnung

Diese und weitere Merkmale gehen außer aus der Beschreibung auch aus den Ansprüchen und der Zeichnung hervor. Eine Ausführungsform der Erfindung ist in der Zeichnung dargestellt und wird im folgenden näher erläutert. Die einzige Zeichnungsfigur zeigt in Form eines schematischen Ablaufdiagramms eine bevorzugte Ausführungsform eines erfindungsgemäßen Verfahrens zur Bestimmung von zylinderindividuellen Füllungsunterschieden.

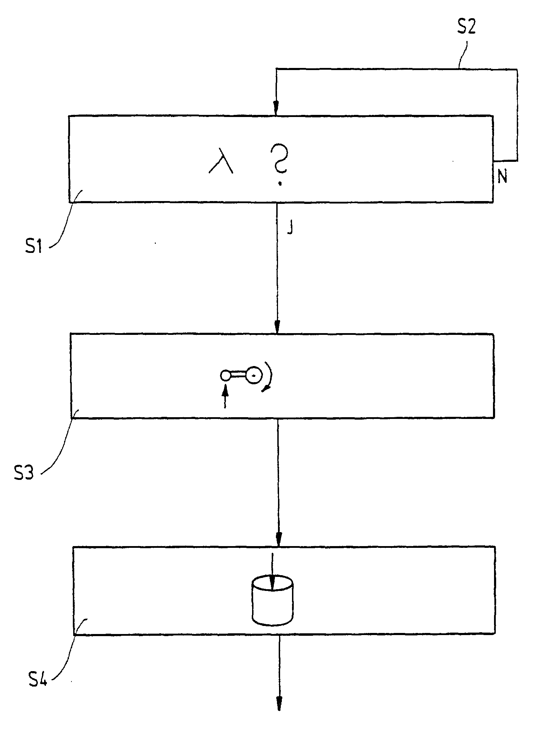

Das anhand von Fig. 1 erläuterte Verfahren zur Bestimmung von zylinderindividuellen Füllungsunterschieden ist in Form geeigneter Software und/oder Hardware in einer elektronischen Motorsteuerung für eine Brennkraftmaschine implementiert, bei der es sich im Beispiel um einen Otto-Motor mit Benzin-Direkteinspritzung handelt. Das Steuergerät ist neben anderen Funktionen auch dazu ausgebildet, eine Zylindergleichstellung der zylinderindividuellen Drehmomente auf Grundlage von Laufunruhewerten der Brennkraftmaschine bereitszustellen. Dabei werden durch geeignete Maßnahmen individuelle Beiträge der einzelnen Zylinder zur Laufunruhe des Motors bestimmt und die zylinderspezifischen Einspritzzeiten und damit die zylinderindividuellen Drehmomentbeiträge werden so geregelt, daß sich die zylinderindividuellen Laufunruhewerte einem gemeinsamen Sollwert annähern. Ein Beispiel einer derartigen Motorsteuerung ist in der EP 0 140 065 B1 beschrieben. Ein anderes Beispiel ist in der DE 198 28 279 offenbart. Auf die Offenbarung dieser Dokumente bzgl. der Gleichstellung der zylinderindividuellen Drehmomentbeiträge wird ausdrücklich Bezug genommen.

Bei der Zylindergleichstellungsregelung bzgl. der Drehmomentbeiträge werden Laufunruhesignale gebildet, die reale, zylinderindividuelle Winkelbeschleunigungsbeiträge der einzelnen Zylinder zum Gesamtdrehmoment repräsentieren. Diese werden aus der Auswertung des zeitlichen Verlaufs der Drehbewegung der Kurbel- oder Nockenwelle mit Hilfe sogenannter Segmentzeiten erfaßt. Segmentzeiten sind die Zeiten, in denen die Kurbel- oder Nockenwelle einen vorbestimmten Winkelbereich überstreicht, der einem bestimmten Zylinder zugeordnet ist. Je gleichmäßiger der Motor läuft, desto geringer fallen die Unterschiede zwischen den Segmentzeiten der einzelnen Zylindern aus. Aus den genannten Segmentzeiten läßt sich ein Maß für die Laufunruhe des Motors bilden. Durch eine geeignete Auswertung können die zylinderindividuellen Einspritzmengen bzw. Einspritzzeiten so eingestellt werden, daß sich die zylinderindividuellen Drehmomentbeträge aneinander angleichen, vorzugsweise bis zur Gleichstellung der Drehmomentbeiträge. Für das Verständnis der vorliegenden Erfindung ist vor allem wichtig zu erkennen, daß in einer derartigen Steuerung auch Signale erzeugt werden, die zylinderindividuelle Drehmomentbeiträge bzw. deren Verhältnisse untereinander repräsentieren. Eine derartige Steuerung bietet also die Möglichkeit einer Ableitung von Werten zylinderindividueller Drehmomentbeiträge.

Die Steuerung umfaßt auch eine Zylindergleichstellungsregelung, die es erlaubt, die zylinderindividuellen Luftverhältnisse λ auf einen gemeinsamen Wert, vorzugsweise auf den Wert λ = 1, zu regeln. Diese zylinderindividuelle Lambdaregelung dient im wesentlichen der Abgasverbesserung der Brennkraftmaschine. Die Regelung kann so arbeiten, daß durch Korrekturen bzgl. der Kraftstoffeinspritzung die zylinderindividuellen λ-Werte auf einen gemeinsamen Wert eingeregelt werden. Die zylinderindividuelle Lambdaregelung kann, wie in der o.g. Veröffentlichung "Development of the High Performance..." erwähnt, ebenfalls mit einer Auswertung von Drehzahlschwankungen der Brennkraftmaschine zur Anzeige zylinderindividueller Gemischzusammensetzungsunterschiede arbeiten. Es können also auch hierfür Laufunruhewerte beispielsweise mit Hilfe von Segmentzeiten gebildet werden.

Bei einer mit einer derartigen Steuerung ausgestatteten Brennkraftmaschine kann das Verfahren beispielsweise wie folgt ablaufen (vgl. Zeichnungsfigur). Zu einem gegebenen Ausgangszeitpunkt ist die zylinderindividuelle Lambdaregelung aktiv. In einem ersten Schritt S1 wird bestimmt, ob die zylinderindividuelle Lambdaregelung derart wirkungsvoll arbeitet, daß die Luftverhältnisse λ in allen Zylindern im wesentlichen gleichgestellt sind. Hierzu können beispielsweise mit Hilfe zylinderindividueller Lambda-Sonden die Luftverhältnisse der einzelnen Zylinder gemessen werden. Ist die zylinderindividuelle Lambdaregelung noch nicht so weit eingeschwungen, daß die zylinderindividuellen Lambdawerte innerhalb eines vorgebbaren engen Bereichs aneinander angeglichen sind, so wird, vorzugsweise nach einem vorbestimmten Zeitintervall, erneut eine Überprüfung dahingehend vorgenommen, ob die zylinderindividuelle Lambdaregelung eingeschwungen ist (Schritt S2).

Ist die zylinderindividuelle Lambdaregelung eingeschwungen, so erfolgt im Schritt S3 eine Bestimmung zylinderindividueller Drehmomentbeiträge der einzelnen Zylinder. Diese Bestimmung kann beispielsweise die Messung von Einzelzylinderdrehmomenten mit geeigneten Drehmomentsensoren und/oder die Messung von zylinderindividuellen Brennraumdrücken mittels geeigneter Sensoren umfassen, wobei aus den einzelnen Brennraumdrücken über die Zylindergeometrie die Drehmomentbeiträge ableitbar sind. Auf derartige Messungen und entsprechende Sensoren kann verzichtet werden, wenn die Steuerung der Brennkraftmaschine eine Zylindergleichstellungsregelung für die zylinderindividuellen Drehmomentbeiträge der eingangs erwähnten Art aufweist. In diesem Fall liegen Signale, die zylinderindividuelle Drehmomentbeiträge repräsentieren, als Eingangssignal dieser Regelung ohnehin vor und können zur Ermittlung von Einzelzylinderdrehmomenten genutzt werden. Alle genannten Ausführungen führen dazu, daß am Ende von Schritt S3 Werte für zylinderindividuelle Drehmomentbeiträge bzw. zumindest Relativverhältnisse oder Unterschiede zwischen den Drehmomentbeiträgen einzelner Zylinder vorliegen.

Diese Werte dienen als Eingangsgrößen für Schritt S4, in dem aus den unterschiedlichen Drehmomentbeiträgen der einzelnen Zylinder zylinderindividuelle Füllungsunterschiede abgeleitet werden. Diese Ableitung basiert auf der Annahme, daß die festgestellten unterschiedlichen Drehmomente ihre Ursache im wesentlichen ausschließlich in der unterschiedlichen Füllung, d.h. im unterschiedlichen Gehalt an verbrennbarem Sauerstoff, haben. Mit anderen Worten: Es wird eine direkte Proportionalität zwischen dem Drehmomentbeitrag eines Zylinders und der in diesem Zylinder vorhandenen Füllung angenommen. Es wird also davon ausgegangen, daß bei im wesentlichen gleichen λ-Werten in allen Zylindern ggf. vorhandene Unterschiede bei der Drehmomentabgabe der einzelnen Zylinder ihre Ursachen in unterschiedlichen Füllungen der entsprechenden Zylinder haben. Am Ausgang von Schritt S4 sind demnach Werte für zylinderindividuelle Füllungsunterschiede für die Steuerung verfügbar. Diese können in der Steuerung bei der Berechnung zylinderindividueller, von der Füllung beeinflußte Motorgrößen, beispielsweise der richtigen Zündungseinstellung und/oder Einspritzzeitpunkteinstellung, berücksichtigt werden.

Es ist zu beachten, daß bei einer Motorsteuerung, die sowohl die Möglichkeit einer zylinderindividuellen Lambdaregelung, als auch einer zylinderindividuellen Drehmomentregelung aufweist, diese Regelungen bei reinen Füllungsunterschieden nicht gleichzeitig regelungsaktiv sein dürfen, da sonst beide Verfahren gegeneinander regeln würden. Dies sei am folgenden Beispiel erläutert. Zylinder 1 habe im Verhältnis zu den anderen Zylindern eine erhöhte Füllung. Eine zylinderindividuelle Lambdaregelung würde daraufhin die Einspritzmenge von Zylinder 1 erhöhen, um das Luftverhältnis auf dem Wert λ = 1 einzustellen. Die erhöhte Füllung wird auch eine erhöhte Drehmomentabgabe zur Folge haben. Dementsprechend wird eine Zylindergleichstellungsregelung für die Drehmomentbeiträge die Einspritzmenge von Zylinder 1 reduzieren, um das Drehmoment entsprechend zu reduzieren. Bei einer derartigen Konstellation ist daher zu beachten, daß die Einrichtung zur Zylindergleichstellungsregelung für das Drehmoment nicht zur Regelung der Einspritzmenge benutzt wird, sondern nur zur Messung bzw. zur Ableitung der zylinderindividuellen Drehmomentbeiträge. Es erfolgt also kein Regeleingriff der Drehmomentgleichstellungsregelung.

Bei reinen Einspritzunterschieden dagegen könnten beide Gleichstellungsverfahren parallel laufen, da beide Verfahren in die gleiche Richtung korrigieren. Vorzugsweise wird auch in diesem Fall nur eine zylinderindividuelle Lambdaregelung durchgeführt. Es ist davon auszugehen, daß bei im wesentlichen gleicher Füllung über alle Zylinder und eingeschwungener zylinderindividueller Lambdaregelung auch die zylinderindividuellen Drehmomente im wesentlichen gleich sind.

Durch die dank der Erfindung mögliche Bestimmung zylinderindividueller Füllungsunterschiede ist es möglich, diese bei der Optimierung unterschiedlichster Steuergrößen für die Brennkraftmaschine zu berücksichtigen. So ist es beispielsweise möglich, den Zündwinkel und/oder den Einspritzzeitpunkt der einzelnen Zylinder nun zylinderindividuell zu korrigieren. Dies kann bedeuten, daß der Zündwinkel und/oder der Einspritzzeitpunkt im optimalen Bereich vorgesteuert wird. Dadurch ergibt sich mehr Drehmoment, wobei eine ggf. vorhandene Klopfregelung weniger aktiv sein muß. Es ist auch eine in Abhängigkeit von den zylinderindividuellen Füllungsunterschieden voll variable Ansteuerung von Einlaßventilen und/oder Auslaßventilen möglich. Dadurch kann die Erfindung ggf. zur weitgehend freien zylinderindividuellen Einstellung von Ventilhub und/oder Ventilsteuerzeiten genutzt werden. Das kann dadurch realisiert werden, daß jedem einzelnen Ventil ein eigener, beispielsweise elektromechanischer Antrieb zugeordnet ist, der von der Motorsteuerung ansteuerbar ist. In diesem Fall wäre es auch möglich, festgestellte Füllungsunterschiede durch zylinderindividuelle Ansteuerung der Ventile zu korrigieren bzw. gleichzustellen. Dies kann beispielsweise so ablaufen, daß ein Zylinder mit der aufgrund der Motorunsymmetrie größten Füllung etwas weniger Füllung zugelassen bekommt, so daß im Ergebnis alle Zylinder im wesentlichen den gleichen Drehmomentanteil liefern. Dies trägt zu einer besseren Laufruhe des Motors bei. Eine entsprechende Korrektur der Füllung wäre auch bei der Verwendung von Einzeldrosselklappen, d.h. eine Drosselklappe pro Zylinder, möglich.

## Patentansprüche

1. Verfahren zur Bestimmung zylinderindividueller Unterschiede einer Steuergröße bei einer mehrzylindrigen Brennkraftmaschine mittels einer Bestimmung zylinderindividueller Füllungsunterschiede, **dadurch gekennzeichnet, daß** die Bestimmung von zylinderindividuellen Füllungsunterschieden anhand einer Gleichung durchgeführt wird, die als Variable zylinderindividuelle Luftverhältnisse und zylinderindividuelle Drehmomentbeiträge enthält.

2. Verfahren nach Anspruch 1, **gekennzeichnet durch** folgende Schritte:
Gleichstellung von zylinderindividuellen Luftverhältnissen, vorzugsweise derart, daß für jeden Zylinder ein Wert von λ = 1 eingestellt wird;
Bestimmung zylinderindividueller Drehmomentunterschiede;
Ableitung zylinderindividueller Füllungsunterschiede aus den zylinderindividuellen Drehmomentunterschieden, vorzugsweise unter der Annahme einer Proportionalität zwischen der zylinderindividuellen Drehmomentunterschieden und der zylinderindividuellen Füllungsunterschieden.

3. Verfahren nach Anspruch 2, **dadurch gekennzeichnet, daß** zur Bestimmung von zylinderindividuellen Drehmomentunterschieden eine zylinderindividuelle Messung von zylinderindividuell abgegebenen Drehmomenten und/oder von zylinderindividuellen Brennraumdrücken durchgeführt wird.

4. Verfahren nach Anspruch 2, **dadurch gekennzeichnet, daß** die Bestimmung von zylinderindividuellen Drehmomentunterschieden indirekt anhand einer Auswertung der Laufruhe der Brennkraftmaschine durchgeführt wird.

5. Verfahren nach einem der vorhergehenden Ansprüche, **gekennzeichnet durch** folgende Schritte:
Gleichstellung von zylinderindividuellen Drehmomentbeiträgen;
Bestimmung zylinderindividueller Luftverhältnisunterschiede;
Ableitung zylinderindividueller Füllungsunterschiede aus den zylinderindividuellen Luftverhältnisunterschieden, vorzugsweise unter der Annahme einer Proportionalität zwischen der zylinderindividuellen Luftverhältnisunterschieden und den zylinderindividuellen Füllungsunterschieden.

6. Verfahren nach Anspruch 5, **dadurch gekennzeichnet, daß** zur Bestimmung von zylinderindividuellen Luftverhältnisunterschieden eine zylinderindividuelle Messung von zylinderindividuellen Luftverhältnissen durchgeführt wird.

7. Verfahren nach Anspruch 4 oder 5, **dadurch gekennzeichnet, daß** zur Bestimmung von zylinderindividuellen Luftverhältnisunterschieden Eingangssignale einer Regelungseinrichtung zur Gleichstellung zylinderindividueller Luftverhältnisse genutzt werden.

8. Einrichtung zur Bestimmung zylinderindividueller Unterschiede einer Steuergröße bei einer mehrzylindrigen Brennkraftmaschine, die Mittel zur Bestimmung zylinderindividueller Füllungsunterschiede aufweist, **dadurch gekennzeichnet, daß** die Mittel zur Bestimmung von zylinderindividuellen Füllungsunterschieden mittels einer Gleichung arbeiten, die als Variable zylinderindividuelle Luftverhältnisse und zylinderindividuelle Drehmomentbeiträge enthält.

9. Einrichtung nach Anspruch 8, **gekennzeichnet durch** Mittel zur Gleichstellung von zylinderindividuellen Luftverhältnissen, vorzugsweise derart, daß für jeden Zylinder ein Wert von λ = 1 eingestellt wird; Mittel zur Bestimmung zylinderindividueller Drehmomentunterschiede bei gleichgestellten Luftverhältnissen;
Mittel zur Ableitung zylinderindividueller Füllungsunterschiede aus den zylinderindividuellen Drehmomentunterschieden, vorzugsweise unter der Annahme einer Proportionalität zwischen den zylinderindividuellen Drehmomentunterschieden und den zylinderindividuellen Füllungsunterschieden.

10. Einrichtung nach Anspruch 8 oder 9, **gekennzeichnet durch**
Mittel zur Gleichstellung von zylinderindividuellen Drehmomentbeiträgen;
Mittel zur Bestimmung zylinderindividueller Luftverhältnisunterschiede bei gleichgestellten Drehmomentbeiträgen;
Mittel zur Ableitung zylinderindividueller Füllungsunterschiede aus den zylinderindividuellen Luftverhältnisunterschieden, vorzugsweise unter der Annahme einer Proportionalität zwischen den zylinderindividuellen Luftverhältnisunterschieden und den zylinderindividuellen Füllungsunterschieden.

## Claims

1. Method for determining cylinder-specific differences in a controlled variable in a multicylinder internal combustion engine by determining cylinder-specific charging differences, **characterized in that** the cylinder-specific charging differences are determined by means of an equation which contains, as variables, cylinder-specific air ratios and cylinder-specific torque contributions.

2. Method according to Claim 1, **characterized by** the following steps:
cylinder-specific air ratios are equalized, preferably in such a way that a value of λ = 1 is set for each cylinder;
cylinder-specific torque differences are determined;
cylinder-specific charging differences are derived from the cylinder-specific torque differences, preferably assuming a proportionality between the cylinder-specific torque differences and the cylinder-specific charging differences.

3. Method according to Claim 2, **characterized in that** a cylinder-specific measurement of torques which are output on a cylinder-specific basis and/or of cylinder-specific combustion chamber pressures is carried out in order to determine cylinder-specific torque differences.

4. Method according to Claim 2, **characterized in that** cylinder-specific torque differences are determined indirectly by means of an evaluation of the smooth running of the internal combustion engine.

5. Method according to one of the preceding claims, **characterized by** the following steps:
cylinder-specific torque contributions are equalized;
cylinder-specific air ratio differences are determined;
cylinder-specific charging differences are derived from the cylinder-specific air ratio differences, preferably assuming a proportionality between the cylinder-specific air ratio differences and the cylinder-specific charging differences.

6. Method according to Claim 5, **characterized in that**, in order to determine cylinder-specific air ratio differences, a cylinder-specific measurement of cylinder-specific air ratios is carried out.

7. Method according to Claim 4 or 5, **characterized in that** in order to determine cylinder-specific air ratio differences, input signals of a control device are used to equalize cylinder-specific air ratios.

8. Device for determining cylinder-specific differences in a controlled variable in a multicylinder internal combustion engine which has means for determining cylinder-specific charging differences, **characterized in that** the means for determining cylinder-specific charging differences operate by means of an equation which contains, as variables, cylinder-specific air ratios and cylinder-specific torque contributions.

9. Device according to Claim 8, **characterized by** means for equalizing cylinder-specific air ratios, preferably in such a way that a value of λ = 1 is set for each cylinder;
means for determining cylinder-specific torque differences with equalized air ratios;
means for deriving cylinder-specific charging differences from the cylinder-specific torque differences, preferably assuming a proportionality between the cylinder-specific torque differences and the cylinder-specific charging differences.

10. Device according to Claim 8 or 9, **characterized by** means for equalizing cylinder-specific torque contributions;
means for determining cylinder-specific air ratio differences with equalized torque contributions;
means for deriving cylinder-specific charging differences from the cylinder-specific air ratio differences, preferably assuming a proportionality between the cylinder-specific air ratio differences and the cylinder-specific charging differences.

## Revendications

1. Procédé de détermination de différences de grandeur de commande, propres aux cylindres, dans un moteur à combustion interne à plusieurs cylindres, au moyen d'une détermination de différences de remplissage propres aux cylindres,
**caractérisé en ce que**
la détermination de différences de remplissage propres aux cylindres est effectuée à l'aide d'une équation, qui contient en tant que variables des rapports air/combustible propres aux cylindres et des valeurs de couple propres aux cylindres.

2. Procédé selon la revendication 1,
**caractérisé par**
les étapes suivantes :
- égalisation de rapports air/combustible propres aux cylindres, de préférence de telle sorte que l'on obtient pour chaque cylindre une valeur de λ = 1 ;
- détermination de différences de couple propres aux cylindres ;
- calcul de différences de remplissage propres aux cylindres à partir des différences de couple propres aux cylindres, de préférence dans l'hypothèse d'une proportionnalité entre les différences de couple propres aux cylindres et les différences de remplissage propres aux cylindres.

3. Procédé selon la revendication 2,
**caractérisé en ce que**
pour la détermination de différences de couple propres aux cylindres, on réalise une mesure propre aux cylindres de couples propres aux cylindres et/ou de pressions dans la chambre de combustion propres aux cylindres.

4. Procédé selon la revendication 2,
**caractérisé en ce que**
la détermination de différences de couple propres aux cylindres est effectuée indirectement à l'aide d'une exploitation de la stabilité de marche du moteur à combustion interne.

5. Procédé selon l'une des revendications précédentes,
**caractérisé par**
les étapes suivantes :
- égalisation de valeurs de couple propres aux cylindres ;
- détermination de différences de rapport air/combustible propres aux cylindres ;
- calcul de différences de remplissage propres aux cylindres à partir des différences de rapport air/combustible propres aux cylindres, de préférence dans l'hypothèse d'une proportionnalité entre les différences de rapport air/combustible propres aux cylindres et les différences de remplissage propres aux cylindres.

6. Procédé selon la revendication 5,
**caractérisé en ce que**
pour la détermination de différences de rapport air/combustible propres aux cylindres, on réalise une mesure propre aux cylindres de rapports air/combustible propres aux cylindres.

7. Procédé selon la revendication 4 ou 5,
**caractérisé en ce que**
pour la détermination de différences de rapport air/combustible propres aux cylindres, on utilise des signaux d'entrée d'un dispositif de régulation permettant d'égaliser les rapports air/combustible propres aux cylindres.

8. Dispositif de détermination de différences de grandeur de commande, propres aux cylindres, dans un moteur à combustion interne à plusieurs cylindres, qui présente des moyens de détermination de différences de remplissage propres aux cylindres,
**caractérisé en ce que**
les moyens de détermination de différences de remplissage propres aux cylindres fonctionnent au moyen d'une équation, qui contient en tant que variables des rapports air/combustible propres aux cylindres et des valeurs de couple propres aux cylindres.

9. Dispositif selon la revendication 8,
**caractérisé par**
des moyens d'égalisation de rapports air/combustible propres aux cylindres, de préférence de telle sorte que l'on obtient pour chaque cylindre une valeur de λ = 1 ;
des moyens de détermination de différences de couple propres aux cylindres pour des rapports air/combustibles égalisés ;
des moyens de calcul de différences de remplissage propres aux cylindres à partir des différences de couple propres aux cylindres, de préférence dans l'hypothèse d'une proportionnalité entre les différences de couple propres aux cylindres et les différences de remplissage propres aux cylindres.

10. Dispositif selon la revendication 8 ou 9,
**caractérisé par**
des moyens d'égalisation de valeurs de couple propres aux cylindres ;
des moyens de détermination de différences de rapport air/combustible propres aux cylindres pour des valeurs de couple égalisées ;
des moyens de calcul de différences de remplissage propres aux cylindres à partir de différences de rapport air/combustible propres aux cylindres, de préférence dans l'hypothèse d'une proportionnalité entre les différences de rapport air/combustible propres aux cylindres et les différences de remplissage propres aux cylindres.
